# EUROPÄISCHE PATENTSCHRIFT

(11) **EP 1 618 798 B1**
(45) Veröffentlichungstag und Bekanntmachung des Hinweises auf die Patenterteilung: **07.01.2009**
(21) Anmeldenummer: 04017092.0
(22) Anmeldetag: 20.07.2004
(51) Int. Cl.: A23L 1/221, C11B 9/02

(54) **Mikrowellen-unterstützte Extraktion von flüchtigen Naturstoffen**
Microwave extraction of volatile natural substances
Extraction par microondes de composés naturels volatils

(43) Veröffentlichungstag der Anmeldung: 25.01.2006
(60) Teilanmeldung: 05016104.1
(73) Patentinhaber: Milestone S.r.l., 24010 Sorisole (BG) (IT); Université de la Réunion Laboratoire de Chimie des Substances Naturelles et des Sciences des Aliments, 97715 Saint-Denis Messag cédex 9 La Réunion France DOM (RE)
(72) Erfinder: Visinoni, Franco, 24010 Sorisole (BG) (IT); Chemat, Farid c/o Univ.de La Réunion L.C.S.N.S.A., 97715 Saint-Denis Messag ced.9,LaReunion (FR); Smadja, Jacqueline c/o Univ.de La Réunion L.C.S.N., 97715 Saint-Denis Messag ced.9,LaReunion (FR)
(74) Vertreter: Rupp, Christian

(56) Entgegenhaltungen:
- EP-B- 0 698 076
- FR-A- 2 787 347
- US-A1- 2004 187 340

## Beschreibung

Die vorliegende Erfindung bezieht sich auf ein Verfahren zur Extraktion von flüchtigen Naturstoffen, beispielsweise pflanzlichen Ölen, aus biologischem Material, beispielsweise aus Pflanzen. Dabei wird das biologische Material mit Mikrowellen bestrahlt. Außerdem bezieht sich die vorliegende Erfindung auf eine Vorrichtung zur Durchführung eines solchen Extraktionsverfahrens.

Extraktion flüchtiger Naturstoffe wird beispielsweise im Rahmen der Gewinnung von Produkten bzw. Zwischenprodukten aus den Bereichen Pharmazie, Medizin, Kosmetik, Lebensmitteltechnologie, Aromatherapie und dergleichen eingesetzt.

Das erfindungsgemäße Verfahren kann lösungsmittelfrei durchgeführt werden. Ein Vorteil von lösungsmittelfreien Extraktionsverfahren ist allgemein darin zu sehen, dass es nach dem Extraktionsprozess nicht notwendig ist, den extrahierten Stoff von dem Lösungsmittel zu trennen, um das konzentrierte Extrakt zu erhalten.

Bei der Hydro-Destillation wird das zu extrahierende Material, also beispielsweise Pflanzen in Wasser getaucht und anschließend das Wasser durch Wärmezufuhr zum Sieden gebracht. Dies erfordert Zufuhr von vergleichsweise hohen Energiemengen. Eine andere Möglichkeit stellt die Wasserdampfdestillation dar, bei der Wasserdampf direkt an das zu extrahierende Material geleitet wird.

Verfahren zur Extraktion von Naturstoffen mithilfe von Mikrowellenbestrahlung sind bekannt. Beispielsweise wird in der EP 0 698 076 B1 ein lösungsmittelfreies Verfahren offenbart, bei dem biologisches Material mittels Mikrowellenbestrahlung erwärmt wird; dies führt zur Verdunstung des in den pflanzlichen Zellen befindlichen Wassers und in der Folge zum Aufbrechen von Zellstrukturen, so dass bei diesem Prozess neben Wasserdampf auch in den Pflanzen befindliches Öl frei wird. Der Druck in der Mikrowellenkammer wird dabei zeitweilig signifikant vermindert, um den Vorgang der Freisetzung von Zelleninhalt zu begünstigen. Auf diese Weise wird ermöglicht, das Verfahren vergleichsweise schnell und effizient durchzuführen.

Allerdings wird bei diesem Verfahren durch die enormen Druckschwankungen das biologische Material in besonderem Maße beansprucht. Das rasche Absinken der Temperatur aufgrund der Verdunstung des pflanzlichen Wassers durch die Senkung des Drucks wird teilweise durch Heizen der Wände des Mikrowellenraums kompensiert. Die Wände der Mikrowellenkammer sind dafür als thermostat-kontrollierte Doppelwände ausgestaltet.

Ein weiteres lösungsmittelfreies Extraktionsverfahren ist aus dem Artikel "Microwave Oven Extraction of an Essential Oil" von A.A. Craveiro et al. aus der Zeitschrift "Flavour and Fragrance Journal", Vol. 4., Seiten 43 bis 44, 1989 bekannt. Auch bei diesem Verfahren wird biologisches Material durch Mikrowellenbestrahlung erhitzt. Die dabei entstehenden Dämpfe enthalten pflanzliches Öl und werden aus dem Mikrowellenofen abgeführt und gekühlt, so dass es zur Kondensation des Öls kommt.

Gemäß diesem zuletzt genannten Verfahren wird Luft von außerhalb des Mikrowellenofens in den Innenraum des Mikrowellenofens gepumpt. Dadurch wird ein Luftstrom hervorgerufen, mit dem das freigesetzte Öl abtransportiert wird. Durch das Zuführen von Luft mittels Luftpumpe von außerhalb des Mikrowellenofens besteht die prinzipielle Gefahr des Eintrags von unerwünschten Stoffen, die die Reinheit des extrahierten Öls beeinträchtigen.

Der Erfindung liegt die Aufgabe zugrunde, eine Extraktionstechnik vorzuschlagen, die eine besonders schonende und effiziente Extraktion erlaubt.

Diese Aufgabe wird erfindungsgemäß durch die Merkmale der unabhängigen Ansprüche gelöst. Die abhängigen Ansprüche bilden den zentralen Gedanken der Erfindung in besonders vorteilhafter Weise weiter.

Gemäß einem ersten Aspekt der Erfindung ist ein Verfahren zur Extraktion eines flüchtigen Naturstoffes aus biologischem Material vorgeschlagen. Das biologische Material enthält dabei Wasser, beispielsweise also pflanzliches Wasser, das im Kreislauf geführt wird. Das erfindungsgemäße Verfahren weist folgende Schritte auf: Zunächst wird das biologische Material, beispielsweise Pflanzen, in einen Mikrowellenraum, also beispielsweise in einen Mikrowellenofen, eingebracht. Das biologische Material muss dabei nicht besonders fein zerkleinert sein. Beispielsweise können auch Blätter in ganzen Stücken verwendet werden. Ein Lösungsmittel muss nicht zugesetzt werden.

Anschließend wird der Druck in dem Mikrowellenraum auf einen vorgewählten, geregelten Bereich reduziert.

Nach Herstellung des reduzierten Drucks, welcher auf einem im Wesentlichen konstanten Wert gehalten wird, wird das biologische Material gemäß der Erfindung mit Mikrowellen bestrahlt. Dies führt zur Erwärmung des in den Pflanzen befindlichen Wassers bis es - je nach herrschendem Druck - zur Verdampfung kommt und in der Folge zum Bersten der Wände pflanzlicher Zellen, die Wasser enthalten. Zusammen mit dem Wassers werden die flüchtigen Naturstoffe freigesetzt, die sich in dem biologischen Material befinden.

Durch die Druckreduktion wird erreicht, dass sich der Sättigungsdampfdruck über Wasser und damit die Siedetemperatur in dem Mikrowellenraum verringert ("Dampfdruckkurve"). Das bedeutet, dass durch die Reduktion des Drucks unter Normaldruck (1013 hPa) die Verdampfung des in dem biologischen Material befindlichen Wassers bei einer Temperatur stattfindet, deren Wert unter 100°C liegt. Im Vergleich zu einer Behandlung bei Normaldruck ist das biologische Material während der Extraktion somit nur einer "reduzierten" Temperatur, also einer Temperatur unter 100°C ausgesetzt.

Die verschiedenen Komponenten des flüchtigen Naturstoffes, also beispielsweise die verschiedenen Komponenten von einem zu gewinnenden pflanzlichen Öl, sind im Allgemeinen mehr oder weniger thermolabil, also temperaturunbeständig. Für eine bestimmte Komponente gibt es daher im Allgemeinen einen bestimmten Temperatur-Schwellenwert oder Temperatur-Schwellenbereich, oberhalb dessen die Komponente als solche zerstört wird oder zumindest verändert oder geschädigt wird. Durch die Druckreduktion wird mithin ermöglicht, die Extraktion bei einer "reduzierten" Temperatur durchzuführen und auf diese Weise bestimmte Komponenten oder Bestandteile des zu extrahierenden Stoffes zu erhalten oder zu "schonen", die bei etwa 100°C, also bei "nicht-reduzierter" Temperatur nicht beständig wären.

Wird der Druck im Raumbereich des biologischen Materials rein beispielhaft auf 311 hPa abgesenkt, siedet Wasser bereits bei 70 °C. Bei einem Druck von 23,3 hPa beträgt die Siedetemperatur von Wasser nur noch 10 °C.

In einem weiteren Schritt werden die Dämpfe, die insbesondere pflanzliches Wasser und den/die zu extrahierenden Naturstoff(e) enthalten, unter bspw. Nutzung der aufgrund der Erwärmung natürlicherweise entstehenden Konvektion aus dem Mikrowellenraum nach oben hin abgeleitet und in einen Kondensationsraum weitergeleitet. In diesem Kondensationsraum erfolgt eine Abkühlung der Dämpfe bis zur Kondensation des freigesetzten Naturstoffes. Der auf diese Weise verflüssigte Naturstoff wird dann schließlich aus dem Kondensationsraum abtransportiert. Sämtliche Transportvorgänge erfolgen aufgrund eines natürlichen Kreislaufs ohne mechanische Hilfen (Pumpen etc.).

Vorteilhaft wird das biologische Material ohne Zusatz von Lösungsmittel in den Mikrowellenraum eingebracht. Die Extraktion kann so lösungsmittelfrei durchgeführt werden.

Vorteilhaft wird das biologische Material in einem Gefäß, das für Mikrowellen wenigstens teilweise durchlässig ist, in den Mikrowellenraum eingebracht. Das Gefäß kann beispielsweise aus Glas bestehen. Bei Bestrahlung des Mikrowellenraums mit Mikrowellen bilden sich aufgrund der Reflexionseigenschaften entlang der Wände des Mikrowellenraums Knotenflächen der Mikrowellenstrahlen aus.

Die Wandflächen werden daher durch die Mikrowellenbestrahlung nicht direkt erwärmt. Wird nun das biologische Material in einem Gefäß in den Mikrowellenraum eingebracht, befindet sich das Material in einem gewissen Abstand von der Wand und somit in einem Abstand zu den erwähnten Knotenflächen. Die Erwärmung kann somit wesentlich effektiver erfolgen.

Ohne Verwendung eines solchen Gefäßes kann es während des Extraktionsvorgangs dazu kommen, dass der Dampf, der sich im Mikrowellenraum ausbildet und neben Wasser auch den zu gewinnenden Naturstoff enthält, an der Wand, die durch die Bestrahlung wie beschrieben nicht direkt erwärmt wird, kondensiert. Das Kondensat fließt dann in Form von Tröpfchen an der Wand nach unten ab und kann auf diese Weise dem weiteren Extraktionsprozess verlorengehen. Dies ist insbesondere hinsichtlich der Ausbeute nachteilig.

Vorteilhaft wird der Unterdruck während der Bestrahlung des biologischen Materials in einem vorgegebenen Bereich geregelt. Beispielsweise kann der Druck unterhalb eines vorgegebenen Schwellenwerts gehalten werden. Beispielsweise kann er vorteilhaft im Wesentlichen auf einem bestimmten, vorab festgelegten Wert konstant gehalten werden. Auf diese Weise wird sichergestellt, dass die Siedetemperatur einen bestimmten Wert nicht überschreitet. Der gewünschte Wert der Siedetemperatur kann auf diese Weise mithilfe der Dampfdruckkurve und unter Berücksichtigung der Thermolabilität des zu gewinnenden Naturstoffs bzw. einer Komponente desselben vorteilhaft vorab gewählt werden. Vorteilhaft kann der Unterdruck derart gewählt werden, dass die Extraktion im Temperaturbereich von etwa 40 bis 100 °C erfolgt.

Vorteilhaft wird der Druck, der im Raumbereich um das biologische Material herrscht, erfasst. Die Regelung des Drucks während der Bestrahlung kann dann in Abhängigkeit des so erfassten Drucks einerseits und des Sollwerts für den Druck andererseits erfolgen. Die Erfassung des Ist-Werts des Drucks kann beispielsweise mithilfe eines Drucksensors erfolgen, der im Mikrowellenraum positioniert ist.

Vorteilhaft sind der Mikrowellenraum und der Kondensationsraum miteinander dicht verbunden und bilden Teile eines nach außen hin abgeschlossenen Systems. Auf diese Weise kann der Eintrag unerwünschter Stoffe in das System verhindert werden. Dadurch kann in schonender Weise höchsten Reinheitsansprüchen genüge geleistet werden.

Bei dem flüchtigen Naturstoff kann es sich beispielsweise um pflanzliches Öl oder andere Essenzen handeln.

Wird das biologische Material während der Bestrahlung gerührt (Magnetrührer etc.), so kann dadurch eine Expositionsverbesserung und eine besonders gleichmäßige Bestrahlung bewirkt werden.

Eine Durchmischung und damit eine Expositionsverbesserung kann auch durch einen rotierbaren, schräg angeordneten Aufnahmebehälter für das biologische Material erzielt werden. Auch eine besonders gleichförmige Bestrahlung lässt sich damit erreichen.

Der Kondensationsraum, der sich oberhalb des Mikrowellenraumes befindet, ist von letzterem durch eine Trennwand abgetrennt, die sich nach oben hin verjüngt und dabei im oberen Bereich eine Öffnung aufweist, durch welche die durch Konvektion sich bewegende Luft hindurchtreten kann. Auf diese Weise werden in diesem Bereich die Dämpfe thermisch an einem Zurückweichen in Richtung Mikrowellenraum gehindert.

In einem Übergangsbereich zwischen dem Mikrowellenraum und dem Kondensationsraum kann vorzugsweise zusätzlich Wärme zugeführt werden, um auf diese Weise die Konvektionsbewegung der Luft zu unterstützen und eine Kondensation in diesem Bereich zu verhindern.

Die Kühlung in dem Kondensationsraum erfolgt vorzugsweise durch eine Wandkühlung. Dadurch kann eine Tröpfchenbildung des Naturstoffes an der Wand des Kondensationsraumes erzielt werden, was in der Folge zur leichteren Abtrennung des kondensierten Materials aus dem Kondensationsraum führt.

Der Abtransport des freigesetzten, kondensierten Naturstoffes aus dem Kondensationsraum kann vorteilhaft durch einen Kanal erfolgen, der im Bodenbereich aus dem Kondensationsraum führt, so dass Flüssigkeit der Schwerkraft folgend abgeleitet wird. Ein mit dem Kanal verbundenes Aufnahmegefäß kann der Aufnahme des kondensierten Naturstoffes dienen.

Um ein vorzeitiges Austrocknen des bestrahlten biologischen Materials zu verhindern, wird vorteilhaft in dem Kondensationsraum kondensiertes Wasser wieder dem Mikrowellenraum zugeführt. Hierzu kann beispielsweise eine mit dem Aufnahmegefäß verbundene Überlaufvorrichtung dienen, mit der Wasser von dem kondensierten Naturstoff getrennt wird, bevor es dem Mikrowellenraum wieder zugeleitet wird. Auf diese Weise kann das Wasser in dem System im Kreislauf gehalten werden, während sich der Naturstoff in dem Aufnahmegefäß anreichert.

Vorteilhaft kann das erfindungsgemäße Verfahren auch kontinuierlich durchgeführt werden. Dazu wird also das zu behandelnde biologische Material kontinuierlich in den Mikrowellenraum eingebracht und nach Behandlung kontinuierlich wieder aus dem Mikrowellenraum heraus transportiert. Hierzu kann beispielsweise eine Förderschnecke oder ein Förderband oder dergleichen verwendet werden.

Gemäß einem weiteren Aspekt der Erfindung ist eine Vorrichtung zur Extraktion eines flüchtigen Naturstoffes aus biologischem Material vorgesehen. Die Vorrichtung weist einen Mikrowellenofen mit einem Mikrowellenraum auf, wobei der Mikrowellenraum zur Aufnahme von biologischem Material vorgesehen ist; außerdem weist die Vorrichtung Mittel zur Erzeugung eines (geregelten) Unterdrucks in dem Mikrowellenraum auf. Diese Mittel können beispielsweise eine an sich bekannte Vakuumpumpe umfassen.

Weiterhin weist die Vorrichtung einen Kondensationsraum auf, der sich oberhalb des Mikrowellenraumes befindet und mit letzterem durch einen Verbindungskanal verbunden ist. Durch diesen Verbindungskanal kann Luft von dem Mikrowellenraum in den Kondensationsraum gelangen.

Vorteilhaft bilden der Mikrowellenraum und der Kondensationsraum Teile eines geschlossenen Systems. Auf diese Weise kann ein Eintrag von unerwünschten Stoffen verhindert werden. Weiterhin ist dies vorteilhaft hinsichtlich der Erzeugung von Unterdruck in dem Mikrowellenraum.

Vorteilhaft weist die Vorrichtung weiterhin Mittel zur Regulierung des Unterdrucks auf. Beispielsweise kann es sich hierbei um einen Regler handeln, der in an sich bekannter Weise mit der Vakuumpumpe zur Regulierung derselben verbunden ist.

Vorteilhaft umfassen die Mittel zur Regulierung des Unterdrucks weiterhin einen Drucksensor, mit dem der IstWert des Drucks, der im Bereich des biologischen Materials herrscht, erfasst werden kann, wobei der Drucksensor derart mit dem Regler verbunden ist, dass eine Regelung des Drucks einerseits in Abhängigkeit des vom Drucksensor aktuell erfassten Ist-Werts des Drucks und andererseits in Abhängigkeit eines gewünschten am Regler voreingestellten Soll-Werts des Drucks erfolgen kann. Der Drucksensor kann beispielsweise im Mikrowellenraum vorgesehen sein.

Vorteilhaft umfasst die Vorrichtung weiterhin ein wenigstens teilweise mikrowellendurchlässiges Gefäß zur Aufnahme des biologischen Materials, so dass also das Material in dem Gefäß in den Mikrowellenraum eingebracht werden kann.

Weiterhin vorteilhaft weist der Mikrowellenraum Rührmittel auf, die zur Durchmischung des eingebrachten biologischen Materials vorgesehen sind. Eine solche Durchmischung verbessert die Exposition des biologischen Materials und führt zu einer besonders gleichmäßigen Temperaturverteilung bei Mikrowellenbestrahlung.

Eine besonders homogene Temperaturverteilung und eine Verbesserung der Exposition, besonders bei vergleichsweise stark zerkleinertem biologischen Material, bietet auch ein schräg angeordneter, rotierbarer Aufnahmebehälter. Die Rotationsachse kann längs einer Symmetrieachse des Aufnahmebehälters angeordnet sein. Ein Aufnahmebereich für das Material kann dabei vorteilhaft unsymmetrisch zur Rotationsachse ausgebildet sein. Eine vergleichbare Vorrichtung ist als solche bereits aus der deutschen Patentanmeldung 102 27 836.9 bekannt, auf die diesbezüglich ausdrücklich Bezug genommen wird.

Der Kondensationsraum ist von dem Mikrowellenraum durch eine Trennwand, die eine sich nach oben hin verjüngende Form aufweist und im oberen Bereich eine Öffnung hat, abgetrennt, wobei die Öffnung so dimensioniert ist, dass durch Konvektion bewegte Luft hindurchtreten kann. Durch die sich verjüngende Form werden die Dämpfe, die Naturstoff und pflanzliches Wasser enthalten, an einem Zurückweichen in Richtung Mikrowellenraum gehindert. Die Trennwand ist vorzugsweise aus Kunststoff oder Glas gefertigt.

Als besonders einfache Ausführungsform eignet sich ein Kondensationsraum, der die Form eines vertikal orientierten Zylinders aufweist. Weiterhin vorteilhaft ist der Verbindungskanal ebenfalls in Form eines vertikal orientierten Zylinders gestaltet.

Der Verbindungskanal und der Kondensationsraum können beispielsweise ein- oder zweistückig ausgebildet sein.

Der Verbindungskanal kann eine Heizung, beispielsweise in Form einer elektrischen Wandheizung aufweisen, die dazu geeignet ist, die Konvektionsbewegung der dampfhaltigen Luft in diesem Bereich zu unterstützen und Kondensation in diesem Bereich zu verhindern.

Der Kondensationsraum weist weiterhin vorteilhaft Kühlmittel auf, beispielsweise in Form einer Wandkühlung. Dies ist beispielsweise als Wasserkühlung leicht zu realisieren.

Zum leichten Abtransport des kondensierten Naturstoffes aus dem Kondensationsraum kann der Kondensationsraum in seinem Bodenbereich einen Ablass, beispielsweise in Form eines Kanals aufweisen. Dieser kann mit einem Aufnahmegefäß zur Aufnahme von kondensiertem Naturstoff verbunden sein.

Weiterhin vorteilhaft ist der Ablass oder das Aufnahmegefäß mit einer Überlaufvorrichtung verbunden, die zum Trennen von Naturstoff und Wasser dient. Die Überlaufvorrichtung kann derart gestaltet sein, dass überlaufendes Wasser wiederum dem Mikrowellenraum zugeleitet wird.

Das Aufnahmegefäß kann dabei ein hydrophobes Lösungsmittel, das zur Lösung des Naturstoffes bzw. seiner zu extrahierenden wasserlöslichen Komponente(n) geeignet ist, enthalten.

Die kondensierten Tröpfchen, die Wasser und den zu extrahierenden Naturstoff enthalten, gelangen auf diese Weise in Kontakt mit dem hydrophoben Lösungsmittel. Da dieses zur Lösung des Naturstoffs geeignet ist, kommt es daraufhin zur Lösung dieses Naturstoffs bzw. zur Lösung der Komponente(n) des Naturstoffs, die wasserlöslich ist (sind), in dem Lösungsmittel. Das in den Tröpfchen enthaltene Wasser reichert sich getrennt von dem Lösungsmittel, also beispielsweise in einer Schicht unterhalb des Lösungsmittels an. Der zu gewinnende wasserlösliche Naturstoff bzw. seine wasserlösliche Komponente kann auf diese Weise dem Extraktionsprozess erhalten bleiben, anstatt sich bei Kontakt mit einer Wasserschicht zu lösen und somit der weiteren Extraktion zumindest teilweise verloren zu gehen.

Das zuletzt dargestellte Prinzip des hydrophoben Lösungsmittels lässt sich erfindungsgemäß vorteilhaft mit dem oben dargestellten Verfahren unter Nutzung von Unterdruck verbinden. Dazu ist vorgesehen, dass der Abtransport des freigesetzten Naturstoffs aus dem Kondensationsraum in ein Aufnahmegefäß erfolgt, wobei das Aufnahmegefäß ein hydrophobes Lösungsmittel enthält.

Ein weiterer Vorteil der Variante "hydrophobes Lösungsmittel" ist darin zusehen, dass das biologische Material im Mikrowellenraum nicht in Berührung mit dem Lösungsmittel kommt. Eine Reaktion zwischen dem biologischen Material und einem Lösungsmittel im Mikrowellenraum ist also ausgeschlossen. Dies ist insbesondere hinsichtlich einer im Mikrowellenraum herrschenden erhöhten Temperatur vorteilhaft. Es ist daher auch nicht erforderlich, dass das Lösungsmittel durch Mikrowellenbestrahlung entsprechend miterwärmt wird.

Vorteilhaft wird gemäß der Variante "hydrophobes Lösungsmittel" Wasser, das zusammen mit dem Naturstoff in das Aufnahmegefäß abtransportiert wird, anschließend wenigstens teilweise durch eine Überlaufvorrichtung wieder dem Mikrowellenraum zugeführt. Auf diese Weise wird einem vorzeitigen Austrocknen des Materials vorgebeugt.

Weiterhin vorteilhaft erfolgt der Abtransport des freigesetzten Naturstoffs aus dem Kondensationsraum in ein Aufnahmegefäß, wobei das Aufnahmegefäß eine vor Beginn des Verfahrens eingebrachte Schicht Wasser enthält und das hydrophobe Lösungsmittel auf der Schicht Wasser aufschwimmt. Dadurch wird die Trennung des im Material enthaltenen Wassers, das durch die kondensierten Tröpfchen dem Aufnahmegefäß zugeleitet wird, von dem zu gewinnenden Naturstoff bzw. seiner Komponente erleichtert.

Weiterhin vorteilhaft kann in einem anschließenden weiteren Schritt der Naturstoff oder zumindest seine wasserlösliche Komponente von dem hydrophoben Lösungsmittel getrennt werden. Dies ist an sich aus dem Stand der Technik bekannt.

Weitere Vorteile und Eigenschaften sollen nunmehr anhand einer detaillierten Beschreibung von Ausführungsbeispielen und mit Bezug auf die Figuren der beigefügten Zeichnungen erläutert werden. Es zeigen
- Fig. 1: einen schematischen Querschnitt durch eine erfindungsgemäße Vorrichtung,

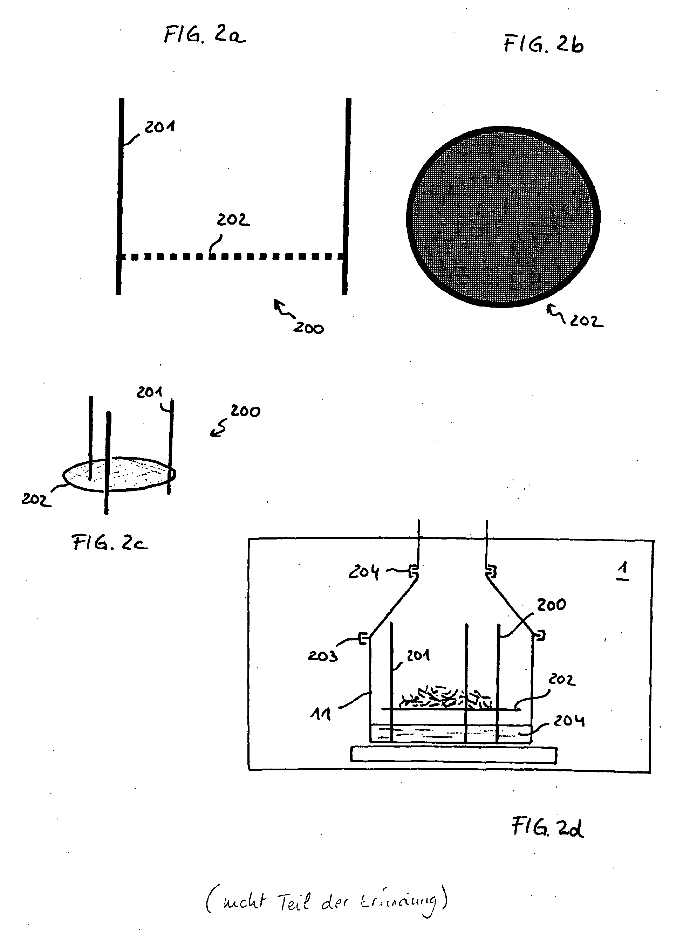

- Figuren 2a bis 2d: schematische Darstellungen eines erfindungsgemäßen Materialträgers, und
- Figuren 3a und 3b: schematische Darstellungen der Variante "hydrophobes Lösungsmittel".

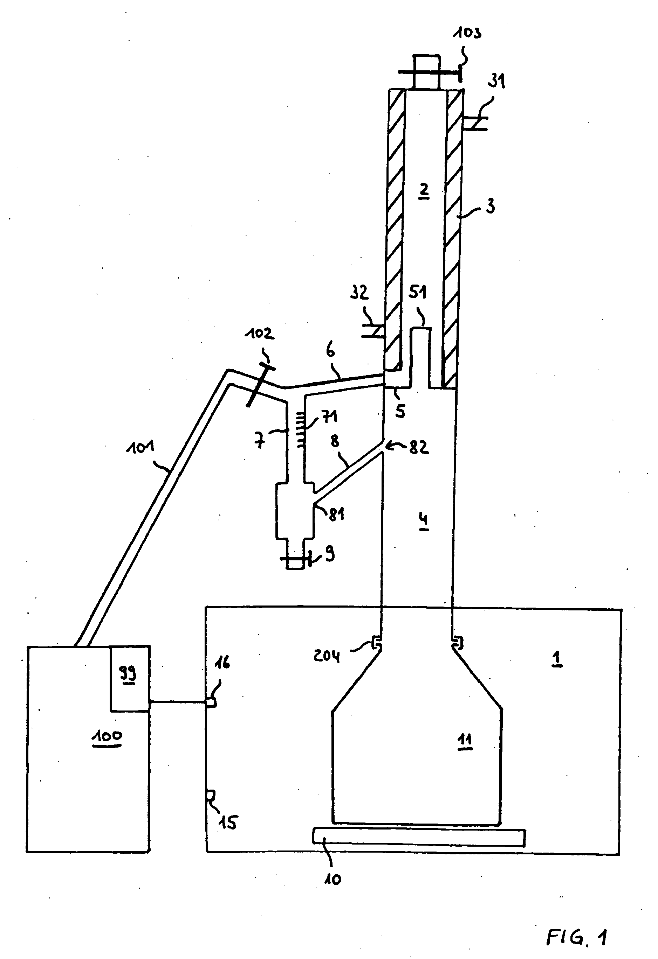

Fig. 1 zeigt eine schematische Darstellung der erfindungsgemäßen Vorrichtung zur Extraktion von flüchtigen Naturstoffen, beispielsweise Ölen, aus biologischem Material wie beispielsweise Pflanzenblättern oder dgl.

In Fig. 1 ist ein Mikrowellenraum 1 dargestellt. Dabei kann es sich beispielsweise um den verschließbaren Innenraum eines Mikrowellenofens handeln. Es ist weiterhin ein Mikrowellengenerator (in der Figur nicht dargestellt) vorgesehen, durch den das Innere des Mikrowellenraumes 1 mit Mikrowellen bestrahlt werden kann. Zur Aufnahme des biologischen Materials während der Behandlung (Extraktion) dient ein mikrowellentransparenter Aufnahmebehälter 11 im Inneren des Mikrowellenraumes 1.

Der Aufnahmebehälter 11 ist beispielsweise mittels einer Drehscheibe 10 drehbar bezüglich des Mikrowellenraumes 1 gelagert. Durch Drehung des Aufnahmebehälters 11 während der Bestrahlung wird für eine homogene Temperaturverteilung in dem biologischen Material gesorgt.

Weiterhin können Rührmittel (nicht gezeigt) vorgesehen sein, die für eine Durchmischung des biologischen Materials während der Bestrahlung sorgen, um auf diese Weise die Exposition des Materials und die Homogenität der Bestrahlung zu verbessern.

Es kann auch vorgesehen sein, den Aufnahmebehälter schräg angeordnet und rotierbar zu gestalten (in der Figur nicht gezeigt). Auf diese Weise wird ebenfalls eine wirkungsvolle Expositionsverbesserung erzielt.

Im Mikrowellenraum 1 ist ein Drucksensor 16 vorgesehen, beispielsweise montiert an der Innenwand des Mikrowellenraums 1, zur Erfassung des Drucks in dem Mikrowellenraum 1 während der Bestrahlung des zu extrahierenden Materials. Der Drucksensor 16 ist Teil einer Reglereinheit 99 zur Regelung einer weiter unten beschriebenen Vakuumpumpe 100.

Der Mikrowellenraum 1 kann weiterhin ein Temperaturmessgerät 15, beispielsweise in Form eines Infrarotsensors aufweisen, mit dem während der Bestrahlung kontinuierlich und berührungslos die Temperatur des bestrahlten Materials erfasst werden kann.

Nach oben ist der Aufnahmebehälter 11 mit einem zylinderförmigen Verbindungskanal 4 über einen dichten Abschluss verbunden. Der Verbindungskanal 4 ragt aus dem Mikrowellenraum 1 nach oben heraus. Hierfür weist der Mikrowellenraum 1 eine Bohrung auf.

Der Verbindungskanal 4 ist beispielsweise aus Glas gefertigt und von einer elektrischen Wandheizung (nicht gezeigt) umgeben, die ein Kondensieren der in dem Verbindungskanal 4 aufsteigenden Dämpfe in diesem Bereich verhindert.

In seinem oberen Bereich ist der Verbindungskanal 4 durch eine Trennwand 5 begrenzt. Diese Trennwand 5 kann aus Glas oder Kunststoff gefertigt sein. Ihr Boden ist waagrecht angeordnet. In der Mitte des Bodens befindet sich eine beispielsweise kreisrunde zentral angeordnete Bodenöffnung, von der aus die Form der Trennwand 5 in ein vertikal nach oben führendes, zylindrisches Rohr übergeht. In Bezug auf ihre Vertikalschnitte weist die Trennwand 5 gemäß diesem Ausführungsbeispiel also in ihrem Verlauf von unten nach oben eine sprunghafte Durchmesserverringerung auf.

Das durch die Trennwand 5 auf diese Weise geformte Rohr ist oben offen und läßt so die Öffnung 51 entstehen. Das Rohr bildet also eine vertikal aufwärts weisende kanal- oder düsenartige Struktur aus.

Oberhalb des Verbindungskanals 4 schließt sich - durch die Trennwand 5 getrennt - ein Kondensationsraum 2 an. Die düsenartige Struktur der Trennwand 5 stellt somit einen Übergang von dem Verbindungskanal 4 in den Kondensationsraum 2 dar und ragt unter Überlappung mit der gekühlten Wand des Kondensationsraums 2 in letzteren hinein.

Der Kondensationsraum 2 hat gemäß diesem Ausführungsbeispiel ebenfalls die Form eines vertikal orientierten Zylinders, beispielsweise mit demselben Innendurchmesser wie der Verbindungskanal 4 und ist derart ausgebildet, dass die Öffnung 51 der Trennwand 5 symmetrisch zur Mittelachse des Kondensationsraumes 2 liegt. Die Unterkante des Kondensationsraumes 2 befindet sich unterhalb des Niveaus der Öffnung 51 und grenzt unmittelbar an den äußeren Rand der Trennwand 5.

Der Kondensationsraum 2 ist mit einer Wandkühlung 3 ausgestattet, die sich gleichmäßig dem Wandverlauf folgend bis unterhalb der Öffnung 51, beispielsweise bis zur Unterkante des Kondensationsraumes 2 erstreckt. Dabei handelt es sich beispielsweise um eine Wasserkühlung (oder sonstige Fluidkühlung) mit einer Zuleitung 31 für kühles Wasser und einer Ableitung 32 für erwärmtes Wasser.

Im Bereich seines tiefsten Punktes weist der Kondensationsraum 2 einen Ablasskanal 6 auf, der zu einem Aufnahmegefäß 7 führt. Der Ablasskanal 6 ist leicht nach unten geneigt, das Aufnahmegefäß 7 hat zylindrische Form und ist vertikal orientiert.

Das Aufnahmegefäß 7 ist mit einer Überlaufvorrichtung verbunden. Diese ist gemäß diesem Ausführungsbeispiel durch ein Rohr 8 realisiert, welches von dem Aufnahmegefäß 7 schräg aufwärts führt und unterhalb der Höhe der Oberkante des Aufnahmegefäßes 7 in den Verbindungskanal 4 mündet. Von dem Niveau der Einmündung 82 des Rohres 8 der Überlaufvorrichtung in den Verbindungskanal 4 aufwärts weist das Aufnahmegefäß 7 eine Pegel-Skalierung 71 auf.

An seinem tiefsten Punkt weist das Aufnahmegefäß 7 ein Ablassventil 9 auf.

Weiterhin weist die erfindungsgemäße Vorrichtung eine Vakuumpumpe 100 auf. Diese ist über eine luftleitende Verbindung 101 und ein Ventil 102 mit der Übergangsstelle des Ablasskanals 6 zu dem Aufnahmegefäß 7 verbunden. Ein weiteres Ventil 103 befindet sich am oberen Ende des Kondensationsraumes 2.

Im zusammengebauten Zustand und bei geschlossenen Ventilen 9, 102, 103 bilden folgende Elemente der Vorrichtung ein druckfest abgeschlossenes System: Der Mikrowellenraum 1, der Verbindungskanal 4, der Kondensationsraum 2, der Ablasskanal 6, das Aufnahmegefäß 7 und das Überlaufrohr 8.

Die Vakuumpumpe 100 ist dazu ausgelegt, bei geöffnetem Ventil 102 und geschlossenen Ventilen 9 und 103 einen Unterdruck in dem angeschlossenen System zu erzeugen.

Die Druckfestigkeit des Systems und die Leistung der Vakuumpumpe 100 sind dabei in Abhängigkeit des gewünschten Unterdrucks geeignet zu wählen. Rein beispielsweise kann vorgesehen sein, das System während der Extraktionszeit (von beispielsweise 30 Minuten) auf einem Unterdruck von ca. 10 hPa zu halten. Vorzugsweise ist die Vakuumpumpe dazu ausgelegt, Unterdruckwerte zwischen 10 und 900 hPa während der Extraktions- bzw. Behandlungszeit aufrechtzuerhalten.

Weiterhin ist eine beispielsweise in der Vakuumpumpe 100 integrierte Reglereinheit 99 für die Vakuumpumpe 100 vorgesehen, die dazu ausgelegt ist, die Vakuumpumpe 100 derart anzusteuern, dass ein bestimmter, eingestellter Wert für den Unterdruck konstant im abgeschlossenen System während der Extraktionszeit aufrecht erhalten werden kann. Dazu muss natürlich der Wert des aktuell herrschenden Drucks im System erfasst und berücksichtigt werden. Hierzu dient gemäß dem hier dargestellten Ausführungsbeispiel der Drucksensor 16, der einen Teil der Reglereinheit 99 darstellt.

Weiterhin kann mithilfe der Reglereinheit 99, insbesondere vor Beginn der Extraktion, ein gewünschter Wert für den Unterdruck voreingestellt werden. Die entsprechende Technik ist dem Fachmann an sich bekannt und daher wird hier nicht näher darauf eingegangen.

Der gewünschte Wert des Unterdrucks ist dabei so zu wählen, dass die Extraktion bei der entsprechenden (gewünschten) Siedetemperatur von Wasser stattfindet. Die Behandlungstemperatur wird also mittels des reduzierten Drucks anhand der bekannten Siedekurve von Wasser eingestellt. Die Extraktionstemperatur kann dabei mithilfe der Dampfdruckkurve ermittelt werden. Beispielsweise ergibt sich für einen Druck von 473 hPa eine Siedetemperatur von Wasser von 80 °C. Die Extraktionstemperatur wiederum ist in Abhängigkeit des zu gewinnenden Naturstoffs, genauer gesagt in Abhängigkeit der Thermolabilität des zu gewinnenden Naturstoffs zu wählen. Häufig wird der Naturstoff mehrere Komponenten enthalten, die gewonnen werden sollen. In diesem Fall kann die Temperatur so gewählt werden, dass diejenige der gewünschten Komponenten, die am temperaturempfindlichsten ist, noch in gewünschtem Maße erhalten bleibt.

Im Folgenden wird auf den Ablauf des erfindungsgemäßen Verfahrens eingegangen. Dabei sind verschiedene Variationen vorgesehen, von denen je nach Umständen eine bevorzugte ausgewählt werden kann. Insbesondere ist dabei zunächst zu unterscheiden, ob das biologische Material noch vergleichsweise viel Wasser enthält, wie das zum Beispiel bei "frischem Pflanzenmaterial" der Fall ist, oder ob das Material nur unwesentlich Wasser enthält, wie das insbesondere bei "getrocknetem Material" der Fall ist.

Bei frischem, also wasserhaltigem Material eignet sich insbesondere folgender Ablauf: Je nach Wassergehalt des Materials kann gegebenenfalls vor der Behandlung einmalig Wasser zugegeben werden, indem beispielsweise das biologische Material vor der Extraktion in Wasser eingeweicht wird. Das biologische Material wird in den Aufnahmebehälter 11 gegeben. Dieser wird auf die Drehscheibe 10 in den Mikrowellenraum 1 gestellt und dicht mit dem Verbindungskanal 4 verbunden. Es ist insbesondere möglich, kein Lösungsmittel zuzugegeben und so die Extraktion lösungsmittelfrei durchzuführen.

Anschließend werden die Ventile 9 und 103 geschlossen und das Ventil 102 geöffnet. Dann wird mithilfe der Reglereinheit 99 der Vakuumpumpe 100 der gewünschte Unterdruck eingestellt und die Vakuumpumpe 100 eingeschaltet.

Nachdem der gewünschte Unterdruck, also der Sollwert des Drucks erreicht ist, wird mit der Mikrowellenbestrahlung begonnen. Während der gesamten Bestrahlung wird der Unterdruck konstant auf dem gewünschten Wert gehalten. Dadurch wird erreicht, dass auch die Siedetemperatur während des gesamten Extraktions- bzw. Bestrahlungsvorgangs konstant gehalten wird.

Die Bestrahlung des biologischen Materials in dem Aufnahmebehälter 11 führt durch Absorption der Mikrowellenstrahlung durch die Wasser-Moleküle zur Erwärmung des pflanzlichen Wassers etwa bis zur Siedetemperatur, die vom herrschendem Unterdruck abhängt. Der Druck innerhalb der das Wasser enthaltenden Zellen steigt und dies führt im weiteren Verlauf zu einem Bersten der Wände der pflanzlichen Zellen, in die Wasser eingelagert ist, und einem Austritt von Wasserdampf, der andere flüchtige Bestandteile mitreißt.

Mit dem Infrarotsensor 15 kann kontinuierlich oder periodisch die Temperatur des biologischen Materials gemessen werden und somit der Temperaturverlauf kontrolliert werden.

Aufgrund der Erwärmung der im Zuge der Bestrahlung in Gasform übergehenden Wassermoleküle in dem Aufnahmebehälter 11 in dem Mikrowellenraum 1 bildet sich selbsttätig eine Konvektions-Aufwärtsbewegung der dampfhaltigen Luft über dem biologischen Material aus. Durch diese Bewegung steigt somit das Dampfgemisch (Wasser und andere flüchtige Substanzen) ohne mechanische Hilfe (Pumpen etc.) nach oben in den Verbindungskanal 4 auf. Die randständige elektrische Heizung des Verbindungskanals 4 heizt während dieses Vorgangs den Verbindungskanal 4 von außen, wodurch die Konvektionsbewegung durch Wärmezufuhr in diesem Bereich weiterhin unterstützt und ein unerwünschtes Kondensieren des Dampfgemisches an den Wänden des Verbindungskanals 4 verhindert wird.

Zu erwähnen ist, dass im Bereich des Mikrowellenraums 1 keine zusätzliche Wärmezufuhr, etwa über die Wände des Mikrowellenraums 1, erforderlich ist.

Wenn sich, beispielsweise aufgrund der Verdampfungsvorgänge in dem Mikrowellenraum 1 der Druck ansatzweise verändert, wird dies durch die Reglereinheit 99 sofort erfasst und die Vakuumpumpe 100 entsprechend angesteuert, so dass der Druck wieder auf den eingestellten Soll-Wert eingeregelt und auf diesem konstant gehalten wird.

Die aufsteigenden Dämpfe erreichen schließlich den Bereich der Trennwand 5 und werden durch die von der Trennwand 5 geformte kanal- oder düsenartige Struktur durch diese hindurch gezwungen, wobei sich die Strömungsgeschwindigkeit beschleunigt. Ein Zurückweichen der Dämpfe bzw. ein unerwünschter Rückfluss von Kondensat nach unten wird dadurch verhindert.

Im weiteren Verlauf strömen die Dämpfe durch die Öffnung 51, wodurch sie in den Kondensationsraum 2 gelangen. Dort kommt es aufgrund der Raumerweiterung zu einer Auffächerung des Dampfstroms, wodurch die Dämpfe bevorzugt an die Wände des Kondensationsraumes 2 geleitet werden, dort abkühlen und absinken.

Durch die Wasserkühlung 3 wird eine Abkühlung der dampfhaltigen Luft in dem Kondensationsraum 2 bewirkt, die schliesslich zur Tröpfchenbildung, bevorzugt an der Innenwand des Kondensationsraumes 2 führt.

Die Tröpfchen bestehen dabei teilweise aus Wasser und teilweise aus kondensiertem pflanzlichem Öl. Der Schwerkraft folgend fließen diese Tröpfchen an der Innenwand des Kondensationsraumes 2 nach unten, sammeln sich am Boden des Kondensationsraumes 2 und werden schließlich durch den Ablasskanal 6 und weiter in das Aufnahmegefäß 7 geleitet.

Das Ablassventil 9 ist geschlossen, so dass sich das Gemisch aus Wasser und Öl im Aufnahmegefäß 7 ansammelt. Die leichtere Ölphase schwimmt dabei obenauf.

Im weiteren Verlauf wird immer mehr Wasser und Öl in kondensierter Form über den Ablasskanal 6 dem Aufnahmegefäß 7 zugeführt, so dass der Flüssigkeitsspiegel dort ansteigt. Nach Erreichen der Mündung 81 des Überlaufrohres 8 in das Aufnahmegefäß 7 steigt der Flüssigkeitsspiegel sowohl in dem Aufnahmegefäß 7 als auch in dem Überlaufrohr 8 weiter an (Prinzip der kommunizierenden Röhren). Erreicht der Flüssigkeitsspiegel schließlich die Mündung 82 des Überlaufrohres 8 in den Verbindungskanal 4, so tritt zunächst eine oben auf schwimmende dünne Schicht Öl und im Folgenden Wasser aus dem Überlaufrohr 8 in den Verbindungskanal 4.

Im weiteren wird über das Überlaufrohr 8 immer mehr kondensiertes Wasser durch den Verbindungskanal 4 dem Aufnahmebehälter 11 in dem Mikrowellenraum 1 rückgeführt. Gleichzeitig steigt in dem Aufnahmegefäß 7 der Pegel der leichteren Ölphase in flüssiger Form an. Dies kann mittels der Pegel-Skalierung 71 durch Ablesen quantitativ erfasst werden.

Nach Abschluss des Verfahrens wird zunächst der Unterdruck wieder abgebaut, beispielsweise mithilfe des Ventils 103. Dabei ist - beispielsweise unter Nutzung eines Filters - darauf zu achten, dass keine verunreinigenden Partikel in das System gelangen. Insbesondere ist natürlich ein Kontakt von verunreinigenden Substanzen mit dem Öl zu vermeiden.

Dann kann mittels des Ablassventils 9 zuerst die untere Wasserphase und in der Folge das kondensierte Öl abgelassen werden.

Weiterhin alternativ ist es möglich, das gewonnene Öl durch eine (nicht dargestellte) verschließbare Öffnung, die beispielsweise im Übergangsbereich des Ablasskanals 6 zum Aufnahmegefäß 7 angeordnet ist, von oben her mit einer Pipette abzusaugen.

Die erfindungsgemäße Vorrichtung kann in einfacher Weise auch bei atmosphärischem bzw. Umgebungsdruck eingesetzt werden. Dazu können die Ventile 103 und 102 geöffnet werden.

Eine weitere Variante der Erfindung (Variante "hydrophobes Lösungsmittel") bezieht sich auf die Extraktion eines Naturstoffs, der wenigstens eine wasserlösliche Komponente enthält, die extrahiert werden soll. Hervorzuheben ist, dass diese Variante bei allen der oben dargestellten Verfahren angewendet werden kann. Sie eignet sich also insbesondere für ein Verfahren bei Unterdruck.

Die Tröpfchen, die aus dem Kondensationsraum 2 kommend über den Ablasskanal 6 in das Aufnahmegefäß 7 geleitet werden, gelangen dort, wie dargestellt, im Allgemeinen in Berührung mit Wasser. Daher besteht prinzipiell die Gefahr, dass eine wasserlösliche Komponente in diesem Wasser gelöst wird und somit der weiteren Extraktion verlorengeht.

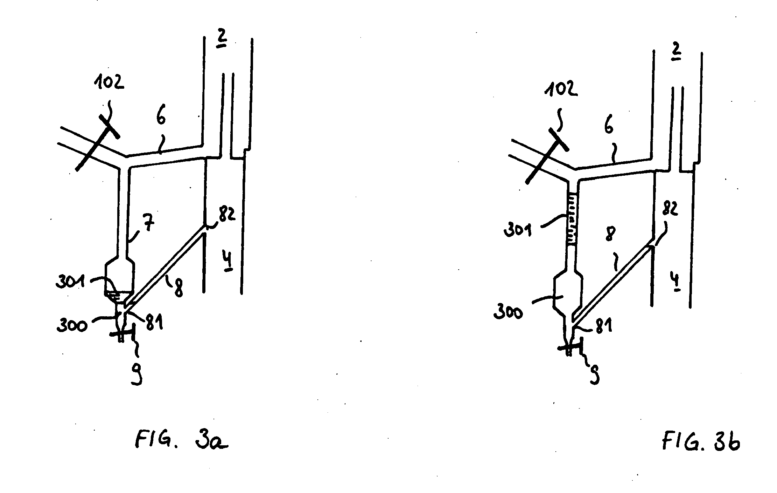

Um dieses Problem zu überwinden, wird gemäß der Variante "hydrophobes Lösungsmittel" vorab, also vor Beginn der Bestrahlung in das Aufnahmegefäß 7 eine gewisse Menge Wasser 300 und ein auf diesem Wasser schwimmendes hydrophobes Lösungsmittel 301 gegeben, das zur Lösung der entsprechenden wasserlöslichen Komponente geeignet ist. Das hydrophobe Lösungsmittel 301 muss also leichter als Wasser sein. Dies ist in Fig. 3a, die einen entsprechenden Ausschnitt der Vorrichtung zeigt, schematisch dargestellt.

Die Menge des in das Aufnahmegefäß 7 einzufüllenden Wassers 300 ist insbesondere abhängig von der Höhe der Ausmündung 81 des Überlaufrohrs 8 aus dem Aufnahmegefäß 7, und zwar ist so viel Wasser 300 einzufüllen, dass die Mündung 81 vollständig unterhalb des Wasserspiegels verläuft. Für diese Variante kann also vorteilhaft die Mündung 81 vergleichsweise tief am Aufnahmegefäß 7 vorgesehen sein, wie in Fig. 3a dargestellt. Die Menge des Lösungsmittels 301 ist insbesondere so groß zu wählen, dass sie zur Lösung der zu lösenden Komponente ausreicht; beispielsweise kann es sich dabei um 20 bis 100 Milliliter hydrophobes Lösungsmittel handeln.

Nach Einfüllen des Wassers 300 und des Lösungsmittels 301 in das Aufnahmegefäß 7 kann nun mit dem Verfahren, wie beschrieben, begonnen werden. Nach Beginn der Bestrahlung kommt es wie dargestellt dazu, dass die aus dem zu gewinnenden Naturstoff und Wasser bestehenden Tröpfchen von oben über den Ablasskanal 6 kommend und der Schwerkraft folgend, dem Aufnahmegefäß 7 zugeleitet werden. Eine wasserlösliche Komponente des Naturstoffs wird nun beim bzw. nach Eindringen in das hydrophobe Lösungsmittel 301 von letzterem in Lösung gebracht. Die Komponente wird also insbesondere gelöst, bevor sie an die Grenze zwischen Lösungsmittel 301 und Wasser 300 gelangen kann. Dadurch wird erzielt, dass die Komponente nicht in die Wasserschicht 300 eindringt und in dieser gelöst und damit dem weiteren Verfahren entzogen werden kann.

Das Wasser, das in den von oben kommenden Tröpfchen enthalten ist, ist schwerer als das Lösungsmittel 301 und reichert sich im weiteren Verlauf folglich unter dem Lösungsmittel 301 an.

Im weiteren Verlauf kommt es nun auf diese Weise dazu, dass sich die zuunterst befindliche Schicht Wasser vergrößert und der Wasserspiegel, wie weiter oben bereits dargestellt, sowohl im Aufnahmegefäß 7 als auch im Überlaufrohr 8 ansteigt. Überschüssiges Wasser wird - wie in Fig. 3b schematisch dargestellt - somit schließlich über die Mündung 82 des Überlaufrohrs 8 dem Verbindungskanal 4 und schließlich dem Aufnahmebehälter 11 zugeführt.

Nach Abschluss des Verfahrens kann zunächst das Wasser und anschließend das Lösungsmittel 301 mit der gelösten Komponente über das Ventil 9 abgelassen werden. Schließlich kann das Lösungsmittel und die Komponente nach an sich bekannten Verfahren wieder getrennt werden. So wird erreicht, dass eine wasserlösliche Komponente dem Extraktionsprozess erhalten bleibt.

Im Allgemeinen enthält der zu gewinnende bzw. zu extrahierende Naturstoff sowohl wenigstens eine wasserlösliche Komponente als auch wenigstens eine ÖlKomponente. In diesem Fall reichern sich bei der Variante "hydrophobes Lösungsmittel" drei Flüssigkeitsschichten im Aufnahmegefäß 7 übereinander an. Zuunterst ist die Wasserschicht 300 und über dieser die beiden Schichten hydrophobes Lösungsmittel 301 und Öl. Durch das beschriebene Ablassen mittels des Ventils 9 am Ende des Verfahrens können die drei Schichten in einfacher Weise voneinander getrennt werden.

Mit der erfindungsgemäßen Vorrichtung können alle dargestellten Varianten der Extraktion durchgeführt werden. Dabei ist die Vorrichtung aus vergleichsweise einfachen Komponenten zusammengesetzt, so dass ohne übermäßigen Aufwand und mit vergleichsweise einfachen und kostengünstigen Mitteln die Vorrichtung hergestellt werden kann.

Weiterhin kann die Vorrichtung räumlich so bemessen sein, dass der Mikrowellenraum beispielsweise eine Größe von etwa 35 mal 35 mal 35 cm³ aufweist und dass in diesem Raum etwa 0,25 bis 5 kg biologischen Materials behandelt werden können. Die Extraktion kann dabei bei allen dargestellten Varianten innerhalb etwa maximal 30 Minuten durchgeführt werden.

Die erfindungsgemäße Vorrichtung kann so gestaltet werden, dass sie sich sowohl zum Laborbetrieb, als auch für Massenproduktion im industriellen Maßstab verwenden lässt. Dabei ist neben einem batch-weisen Betrieb auch ein kontinuierlicher Betrieb mittels Förderband und dergleichen denkbar. Beispielsweise kann dazu das zu behandelnde biologische Material mithilfe einer Fördereinrichtung in den Mikrowellenraum eingebracht werden, in diesem entsprechend langsam weitertransportiert werden und schließlich, nach Beendigung des Verfahrens, wieder aus dem Mikrowellenraum heraus transportiert werden. Dadurch ergibt sich weiterhin der Vorteil, dass das Material durch den Transport innerhalb des Mikrowellenraums unterschiedliche Raumbereiche durchläuft und damit - trotz eines möglicherweise inhomogenen Mikrowellen-Strahlungsfelds - eine homogene Bestrahlung erzielt wird.

Die Vorteile der Erfindung lassen sich wie folgt zusammenfassen:
- Das Verfahren erlaubt eine Extraktion bei Temperaturen, die deutlich unter 100 °C liegen, beispielsweise bei ca. 50 °C, so dass auch thermolabile Komponenten eines Naturprodukts sehr schonend gewonnen werden können.
- Das Verfahren kann lösungsmittelfrei und somit auch von daher besonders schonend und effizient durchgeführt werden.
- Die Vorrichtung besteht aus vergleichsweise einfachen Bauteilen, und kann von daher als wirtschaftlich eingestuft werden.
- Das Verfahren kann in einem geschlossenen System durchgeführt werden, so dass der Eintrag unerwünschter Stoffe ausgeschlossen werden kann. Damit kann man höchsten Reinheitsansprüchen - beispielsweise im Zusammenhang mit der Herstellung homöopathischer Produkte - gerecht werden.
- Die Erfindung ermöglicht auch die Extraktion wasserlöslicher Stoffe.

### Bezugszeichenliste

- 1: Mikrowellenraum
- 2: Kondensationsraum
- 3: Kühlmittel
- 4: Verbindungskanal
- 5: Trennwand
- 6: Ablasskanal
- 7: Aufnahmegefäß
- 8: Überlaufrohr
- 9: Ablassventil
- 10: Drehscheibe
- 11: Aufnahmebehälter
- 15: Temperaturmessgerät
- 16: Drucksensor
- 22: Trennwand
- 31: Wasserzuleitung
- 32: Wasserableitung
- 51: Öffnung
- 71: Pegel-Skalierung
- 81: Mündung des Überlaufrohrs in das Aufnahmegefäß
- 82: Mündung des Überlaufrohrs in den Verbindungskanal
- 99: Reglereinheit der Vakuumpumpe
- 100: Vakuumpumpe
- 101: Verbindung zwischen Vakuumpumpe und System
- 102: Ventil zwischen Vakuumpumpe und System
- 103: Ventil im oberen Bereich des Kondensationsraums
- 200: Materialträger
- 201: Stützen des Materialträgers
- 202: Netz
- 203: Verbindungsstelle bei zweiteiligem Aufnahmebehälter
- 204: Verbindung zwischen Aufnahmebehälter und Verbindungskanal
- 300: Wasser
- 301: hydrophobes Lösungsmittel

## Patentansprüche

1. Verfahren zur Extraktion eines flüchtigen Naturstoffes aus biologischem Material,
wobei das biologische Material Wasser enthält, aufweisend folgende Schritte:
a) Einbringen des biologischen Materials in einen Mikrowellenraum (1),
b) Erzeugen eines Unterdrucks in dem Mikrowellenraum (1) und Halten auf einem im Wesentlichen konstanten Wert,
c) Bestrahlen des biologischen Materials mit Mikrowellen bis zur Freisetzung wenigstens eines Teils des Naturstoffes aus dem biologischen Material,
d) Abtransport des freigesetzten Naturstoffes durch Konvektion aus dem Mikrowellenraum (1) nach oben in einen Kondensationsraum (2),
e) Kühlung des freigesetzten Naturstoffes bis zur Kondensation, und
f) Abtransport des freigesetzten Naturstoffes aus dem Kondensationsraum (2).

2. Verfahren nach Anspruch 1,
**dadurch gekennzeichnet,**
**dass** das biologische Material in einem mikrowellendurchlässigen Gefäß in den Mikrowellenraum eingebracht wird.

3. Verfahren nach Anspruch 1 oder 2,
**dadurch gekennzeichnet,**
**dass** der Unterdruck während der Bestrahlung des biologischen Materials in einem vorgegebenen Bereich geregelt wird.

4. Verfahren nach einem der vorhergehenden Ansprüche,
**dadurch gekennzeichnet,**
**dass** der Mikrowellenraum (1) und der Kondensationsraum (2) Teile eines geschlossenen Systems sind.

5. Verfahren nach einem der vorhergehenden Ansprüche,
**dadurch gekennzeichnet,**
**dass** bei Schritt c) das biologische Material mechanisch bewegt, insbesondere gerührt wird.

6. Verfahren nach einem der vorhergehenden Ansprüche,
**dadurch gekennzeichnet,**
**dass** der Mikrowellenraum einen schräg angeordneten, rotierbaren Aufnahmebehälter zur Aufnahme des biologischen Materials aufweist.

7. Verfahren nach einem der vorhergehenden Ansprüche,
**dadurch gekennzeichnet,**
**dass** in einem Übergangsbereich zwischen dem Mikrowellenraum (1) und dem Kondensationsraum (2) Wärmeenergie eingeleitet wird, um die Konvektion zu unterstützen.

8. Verfahren nach einem der vorhergehenden Ansprüche,
**dadurch gekennzeichnet,**
**dass** der Kondensationsraum (2) im Wandbereich gekühlt wird.

9. Verfahren nach einem der vorhergehenden Ansprüche,
**dadurch gekennzeichnet,**
**dass** der kondensierte Naturstoff bei Schritt f) unter Nutzung der Schwerkraft aus dem Kondensationsraum (2) abgeleitet wird.

10. Verfahren nach einem der vorhergehenden Ansprüche,
**dadurch gekennzeichnet,**
**dass** bei Schritt f) zusammen mit dem Naturstoff abgeleitetes Wasser dem Mikrowellenraum (1) zugeführt wird.

11. Verfahren nach Anspruch 10,
**dadurch gekennzeichnet,**
**dass** das abgeleitete Wasser wenigstens teilweise durch eine Überlaufvorrichtung (7, 8) von dem Naturstoff getrennt und dem Mikrowellenraum (1) zugeführt wird.

12. Verfahren nach einem der vorhergehenden Ansprüche,
**dadurch gekennzeichnet,**
**dass** das Verfahren kontinuierlich durchgeführt wird.

13. Verfahren nach Anspruch 1,
**dadurch gekennzeichnet,**
**dass** bei Schritt f) der freigesetzte Naturstoff aus dem Kondensationsraum (2) in ein, ein hydrophobes Lösungsmittel (301) enthaltendes Aufnahmegefäß (7) abtransportiert wird.

14. Vorrichtung zur Extraktion eines flüchtigen Naturstoffes aus biologischem Material, aufweisend:
- einen Mikrowellenofen mit einem Mikrowellenraum (1) zur Aufnahme des biologischen Materials,
- Mittel zur Erzeugung eines geregelten Unterdrucks in dem Mikrowellenraum (1), und
- einen Kondensationsraum (2), wobei der Kondensationsraum (2) oberhalb des Mikrowellenraumes (1) angeordnet ist, und durch einen Verbindungskanal (4) mit dem Mikrowellenraum (1) verbunden ist, **dadurch gekennzeichnet,**
**dass** der Kondensationsraum (2) von dem Mikrowellenraum (1) durch eine Trennwand (5) abgetrennt ist, die eine sich nach oben hin verjüngende Form aufweist und im oberen Bereich eine luftdurchlässige Öffnung (51) aufweist.

15. Vorrichtung nach Anspruch 14,
**gekennzeichnet durch**
Mittel zur Regulierung des Unterdrucks.

16. Vorrichtung nach Anspruch 14 oder 15,
**gekennzeichnet durch**
ein mikrowellendurchlässiges Gefäß zur Aufnahme des biologischen Materials.

17. Vorrichtung nach einem der Ansprüche 14 bis 16,
**dadurch gekennzeichnet,**
**dass** der Mikrowellenraum (1) einen schräg angeordneten, rotierbaren Aufnahmebehälter für biologisches Material aufweist.

18. Vorrichtung nach einem der Ansprüche 14 bis 17
**dadurch gekennzeichnet,**
**dass** der Verbindungskanal (4) Heizmittel, beispielsweise eine elektrische Heizung aufweist.

19. Vorrichtung nach einem der Ansprüche 14 bis 18,
**dadurch gekennzeichnet,**
**dass** der Kondensationsraum (2) in seinem Bodenbereich einen Ablass (6) zum Abtransport von kondensiertem Naturstoff aufweist.

20. Vorrichtung nach Anspruch 19,
**dadurch gekennzeichnet,**
**dass** der Ablass (6) mit einer Überlaufvorrichtung (7, 8) zum Trennen von Naturstoff und Wasser verbunden ist.

21. Vorrichtung nach Anspruch 20,
**dadurch gekennzeichnet,**
**dass** die Überlaufvorrichtung (7, 8) mit dem Verbindungskanal (4) derart verbunden ist, dass überlaufendes Wasser durch Schwerkraft in den Mikrowellenraum (1) fließen kann.

## Claims

1. Process for extracting a volatile natural substance from biological material, wherein the biological material contains water,
comprising the following steps:
a) placing the biological material in a microwave chamber (1),
b) creating a reduced pressure in the microwave chamber (1) and maintaining it at a substantially constant level,
c) irradiating the biological material with microwaves until at least some of the natural substance has been released from the biological material,
d) transporting the released natural substance by convection away from the microwave chamber (1) upwards into a condensation chamber (2),
e) cooling the released natural substance until condensation occurs, and
f) transporting the released natural substance out of the condensation chamber (2).

2. Process according to claim 1, **characterised in that** the biological material is placed in a microwave-permeable vessel in the microwave chamber.

3. Process according to claim 1 or 2, **characterised in that** the reduced pressure during the irradiation of the biological material is regulated within a predetermined range.

4. Process according to one of the preceding claims, **characterised in that** the microwave chamber (1) and the condensation chamber (2) are parts of a closed system.

5. Process according to one of the preceding claims, **characterised in that** in step c) the biological material is mechanically moved, particularly stirred.

6. Process according to one of the preceding claims, **characterised in that** the microwave chamber has a diagonally arranged rotatable receiving container for holding the biological material.

7. Process according to one of the preceding claims, **characterised in that** in a transitional region between the microwave chamber (1) and the condensation chamber (2) thermal energy is introduced in order to assist the convection.

8. Process according to one of the preceding claims, **characterised in that** the condensation chamber (2) is cooled in the wall region.

9. Process according to one of the preceding claims, **characterised in that** the condensed natural substance in step f) is removed from the condensation chamber (2) using gravity.

10. Process according to one of the preceding claims, **characterised in that** in step f) water removed together with the natural substance is supplied to the microwave chamber (1).

11. Process according to claim 10, **characterised in that** the water removed is at least partly separated from the natural substance by an overflow device (7, 8) and supplied to the microwave chamber (1).

12. Process according to one of the preceding claims, **characterised in that** the process is carried out continuously.

13. Process according to claim 1, **characterised in that** in step f) the natural substance released is transported out of the condensation chamber (2) into a receiving vessel (7) containing a hydrophobic solvent (301).

14. Apparatus for extracting a volatile natural substance from biological material, comprising:
- a microwave oven having a microwave chamber (1) for receiving the biological material,
- means for generating a regulated reduced pressure in the microwave chamber (1), and
- a condensation chamber (2), wherein the condensation chamber (2) is arranged above the microwave chamber (1), and is connected to the microwave chamber (1) by a connecting channel (4), **characterised in that** the condensation chamber (2) is separated from the microwave chamber (1) by a partition wall (5) which tapers upwardly in shape and has an air-permeable opening (51) in its upper region.

15. Apparatus according to claim 14, **characterised by** means for regulating the reduced pressure.

16. Apparatus according to claim 14 or 15, **characterised by** a microwave-permeable vessel for holding the biological material.

17. Apparatus according to one of claims 14 to 16, **characterised in that** the microwave chamber (1) comprises a diagonally arranged, rotatable receiving container for biological material.

18. Apparatus according to one of claims 14 to 17, **characterised in that** the connecting channel (4) comprises heating means, for example an electric heater.

19. Apparatus according to one of claims 14 to 18, **characterised in that** the condensation chamber (2) comprises in its base region an outlet (6) for discharging condensed natural material.

20. Apparatus according to claim 19, **characterised in that** the outlet (6) is connected to an overflow device (7, 8) for separating natural substance and water.

21. Apparatus according to claim 20, **characterised in that** the overflow device (7, 8) is connected to the connecting channel (4) such that overflowing water can flow into the microwave chamber (1) under the effect of gravity.

## Revendications

1. Procédé d'extraction d'un composé naturel volatile à partir d'un matériel biologique,
dans lequel le matériel biologique contient de l'eau,
présentant les étapes suivantes :
a) introduction du matériel biologique dans une chambre à micro-ondes (1),
b) génération d'une dépression dans la chambre à micro-ondes (1) et maintien à une valeur essentiellement constante,
c) irradiation du matériel biologique par micro-ondes jusqu'à la libération d'au moins une partie du composé naturel du matériel biologique,
d) évacuation du composé naturel libéré par convection de la chambre à micro-ondes (1) vers le haut dans une chambre de condensation (2),
e) refroidissement du composé naturel libéré jusqu'à condensation, et
f) évacuation du composé naturel libéré hors de la chambre de condensation (2).

2. Procédé selon la revendication 1,
**caractérisé en ce**
**que** le matériel biologique est introduit dans un récipient perméable aux micro-ondes dans la chambre à micro-ondes.

3. Procédé selon la revendication 1 ou 2,
**caractérisé en ce**
**que** la dépression est régulée pendant l'irradiation du matériel biologique dans une plage prédéfinie.

4. Procédé selon l'une quelconque des revendications précédentes,
**caractérisé en ce**
**que** la chambre à micro-ondes (1) et la chambre de condensation (2) sont des éléments d'un système fermé.

5. Procédé selon l'une quelconque des revendications précédentes,
**caractérisé en ce**
**que** dans l'étape c), le matériel biologique est mis en mouvement mécaniquement, en particulier mélangé.

6. Procédé selon l'une quelconque des revendications précédentes,
**caractérisé en ce**
**que** la chambre à micro-ondes présente un récipient collecteur rotatif, incliné servant à recevoir le matériel biologique.

7. Procédé selon l'une quelconque des revendications précédentes,
**caractérisé en ce**
**que** l'énergie thermique est introduite dans une zone de passage entre la chambre à micro-ondes (1) et la chambre de condensation (2), pour soutenir la convection.

8. Procédé selon l'une quelconque des revendications précédentes,
**caractérisé en ce**
**que** la chambre de condensation (2) est refroidie au niveau de la paroi.

9. Procédé selon l'une quelconque des revendications précédentes,
**caractérisé en ce**
**que** dans l'étape f), le composé naturel condensé est évacué de la chambre de condensation (2) par gravité.

10. Procédé selon l'une quelconque des revendications précédentes,
**caractérisé en ce**
**que** dans l'étape f), de l'eau évacuée conjointement avec le composé naturel est amenée à la chambre à micro-ondes (1).

11. Procédé selon la revendication 10,
**caractérisé en ce**
**que** l'eau évacuée est séparée du composé naturel au moins en partie par un dispositif de trop-plein (7, 8) et amenée à la chambre à micro-ondes (1).

12. Procédé selon l'une quelconque des revendications précédentes,
**caractérisé en ce**
**que** le procédé est réalisé en continu.

13. Procédé selon la revendication 1,
**caractérisé en ce**
**que** dans l'étape f), le composé naturel libéré est évacué de la chambre de condensation (2) dans un récipient collecteur (7) contenant un solvant hydrophobe (301).

14. Dispositif d'extraction d'un composé naturel volatile à partir d'un matériel biologique présentant :
- un four à micro-ondes avec une chambre à micro-ondes (1) servant à recevoir le matériel biologique ;
- des moyens de génération d'une dépression régulée dans la chambre à micro-ondes (1), et
- une chambre de condensation (2), la chambre de condensation (2) étant agencée au-dessus de la chambre à micro-ondes (1) et reliée à la chambre à micro-ondes (1) par un canal de raccordement (4), **caractérisé en ce**
**que** la chambre de condensation (2) est séparée de la chambre à micro-ondes (1) par une cloison (5), qui a une forme se rétrécissant vers le haut et présente une ouverture perméable à l'air (51) dans la zone supérieure.

15. Dispositif selon la revendication 14,
**caractérisé par**
des moyens de régulation de la dépression.

16. Dispositif selon la revendication 14 ou 15,
**caractérisé par**
un récipient perméable aux micro-ondes servant à recevoir le matériel biologique.

17. Dispositif selon l'une quelconque des revendications 14 à 16,
**caractérisé en ce**
**que** la chambre à micro-ondes (1) présente un récipient collecteur rotatif, incliné pour le matériel biologique.

18. Dispositif selon l'une quelconque des revendications 14 à 17,
**caractérisé en ce**
**que** le canal de raccordement (4) présente des moyens de chauffage, par exemple un chauffage électrique.

19. Dispositif selon l'une quelconque des revendications 14 à 18,
**caractérisé en ce**
**que** la chambre de condensation (2) présente au niveau de son fond une évacuation (6) pour l'évacuation du composé naturel condensé.

20. Dispositif selon la revendication 19,
**caractérisé en ce**
**que** l'évacuation (6) est reliée à un dispositif de trop-plein (7, 8) pour la séparation du composé naturel et de l'eau.

21. Dispositif selon la revendication 20,
**caractérisé en ce**
**que** le dispositif de trop-plein (7, 8) est relié au canal de raccordement (4) de telle manière que le trop-plein d'eau peut s'écouler par gravité dans la chambre à micro-ondes (1).
